# EUROPÄISCHE PATENTSCHRIFT

(11) **EP 0 812 993 B1**
(45) Veröffentlichungstag und Bekanntmachung des Hinweises auf die Patenterteilung: **27.02.2002**
(21) Anmeldenummer: 97106257.5
(22) Anmeldetag: 16.04.1997
(51) Int. Cl.: F16B 31/02, B60T 17/08

(54) **Baugruppe mit einer Schraube und einer Mutter**
Assembly with a screw and a nut
Ensemble avec une vis et un écrou

(30) Priorität: 13.06.1996 DE 19623522
(43) Veröffentlichungstag der Anmeldung: 17.12.1997
(73) Patentinhaber: WABCO GmbH & Co. OHG, 30453 Hannover (DE)
(72) Erfinder: Brehmer, Dieter, 30627 Hannover (DE); Breidel, Horst, 30952 Ronnenberg (DE); Gross, Friedrich, 30926 Seelze (DE); Homann, Peter, 31535 Neustadt (DE); Matthias, Wilfried, 31542 Bad Nenndorf (DE); Unger, Herbert, 31816 Springe (DE)
(74) Vertreter: Schrödter, Manfred, Dipl.-Ing.

(56) Entgegenhaltungen:
- BE-A- 1 007 782
- FR-A- 1 477 006

## Beschreibung

Die Erfindung betrifft eine Baugruppe mit einer Schraube und einer Mutter nach dem Oberbegriff des Patentanspruchse 1, wie er aus der FR-A-1 477 006 bekannt geworden ist. Beim Einsatz solcher Baugruppen kommt es häufig vor, daß die Mutter von der Einsteckseite der Schraube her nicht sichtbar ist, so daß auch der Verschraubungszustand der Baugruppe von dieser Seite her nicht erkennbar ist.

Der Erfindung liegt die Aufgabe zugrunde, mit einfachen Mitteln den Verschraubungszustand einer Baugruppe der eingangs genannten Art von der Einsteckseite der Schraube her erkennbar zu machen.

Diese Aufgabe wird durch die im Kennzeichnungsteil der Patentanspruchs 1 angegebene Erfindung gelöst. Vorteilhafte Ausgestaltungen und ein bedeutsamer Anwendungsfall sind in den Unteransprüchen angegeben.

Weitere Vorteile der Erfindung werden in deren nunmehr folgender, auf Ausführungsbeispiele gestützter, Erläuterung genannt.

Mit durchgehend einheitlichen Bezugszeichen für Komponenten mit gleichen Funktionen zeigen
- Fig. 1: die Grundausführung einer Baugruppe mit einer Schraube und einer Mutter sowie einer Anzeigevorrichtung,
- Fig. 2: ausschnittsweise eine Fortbildung des Ausführungsbeispiels nach Fig. 1,
- Fig. 3: eine weitere Fortbildung,
- Fig. 4: einen Anwendungsfall der Fortbildung nach Fig. 3.

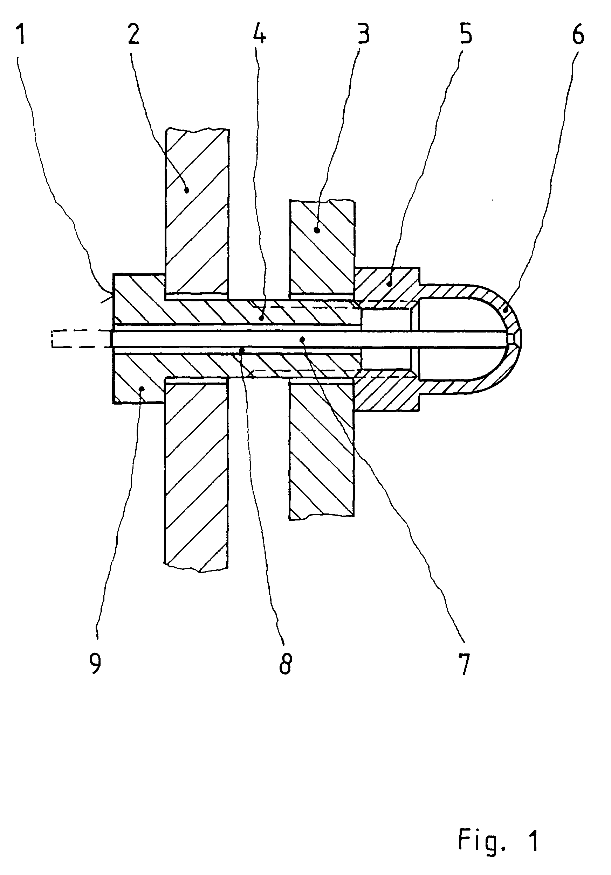

Die in Fig. 1 dargestellte Baugruppe mit einer Schraube (4) und einer Mutter (5) dient zum Verbinden zweier schematisch angedeuteter Bauteile (2 und 3).

Die Schraube (4) ist in ihrer Längsrichtung hohl.

Die Mutter (5) ist in einer Stellung gezeichnet, in der sie unverschraubt, also ohne daß ihr Gewinde mit dem Schraubengewinde im Eingriff steht, auf das Schraubenende aufgesetzt ist. Von der Mutter (5) geht ein als ein Stift ausgebildeter Fortsatz (7) aus, der in der gezeichneten Stellung der Mutter in den Hohlraum (8) der Schraube (4) eindringt. Der Fortsatz endet im Bereich des Schraubenkopfes (9). In nicht dargestellter Weise kann der Fortsatz (7) auch an einer anderen Stelle innerhalb des Hohlraums (8) der Schraube (4) enden. Entsprechend der gestrichelten Darstellung kann der Fortsatz (7) auch den Hohlraum der Schraube (4) durchdringen, also, von der Mutter aus gesehen, auch jenseits der Schraube (4) enden.

Beim Verschrauben von Mutter (5) und Schraube (4) verändert sich die Lage des Endes des Fortsatzes (7) relativ zu einem Bezugspunkt bzw. zu einer Bezugsfläche der Schraube (4), beispielsweise relativ zu deren Stirnfläche (1). Deshalb läßt sich durch Beobachten des Endes des Fortsatzes (7) ohne Sicht auf die Mutter (5) der Verschraubungszustand der Baugruppe erkennen.

Erleichtert wird dieses Erkennen, wenn das Ende des Fortsatzes in der bereits erwähnten Stellung der Mutter (5) genau oder näherungsweise mit der Stirnfläche (1) des Schraubenkopfes (9) abschließt. In dieser vorteilhaften und auch dargestellten Ausgestaltung vermittelt ein Hervortreten des Endes des Fortsatzes (7) aus der Stirnfläche (1) des Schraubenkopfes (9) auf den ersten Blick die Information, daß die Verschraubung von Schraube (4) und Mutter (5) begonnen oder vollendet ist.

Bei jeder der vorstehend erwähnten Anordnungen des Endes des Fortsatzes erleichtert auch eine farbliche Markierung des Endes des Fortsatzes (7) die Erkennbarkeit.

Zwecks Sicherstellung der beschriebenen Wirkung muß die Mutter (5) so ausgebildet sein, daß sie den Fortsatz (7) aufnehmen und trotzdem die für den jeweiligen Anwendungsfall erforderliche Einschraubtiefe gewährleistet. Im Ausführungsbeispiel ist zu diesem Zweck an das von der Schraube (4) abgewandte Ende der Mutter (5) eine Kuppel (6) angeformt, die das beim Verschrauben das Gewinde der Mutter (5) durchdringende Schraubenende aufnimmt.

Im Ausführungsbeispiel ist der Fortsatz (7) mit der Kuppel (6) der Mutter (5) vernietet. Die Ausbildung der Mutter (5) und die Verbindung zwischen Mutter (5) und Fortsatz (7) können aber auch auf jede andere zweckdienliche Art erfolgen. Auch eine einteilige Ausbildung von Mutter (5) und Fortsatz (7) ist möglich.

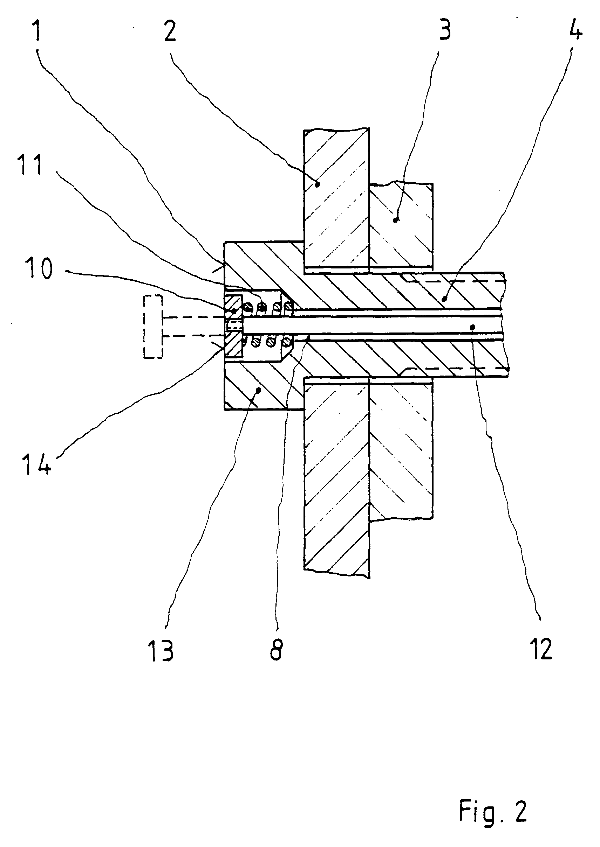

In der in Fig. 2 ausschnittsweise dargestellten Fortbildung weist der mit (12) bezeichnete Fortsatz an seinem der Mutter abgewandten Ende einen Kopf (10) auf. Dieser verbessert die Erkennbarkeit der Lage des Endes des Fortsatzes (12). Für die möglichen Lagen des Kopfes gilt das oben zu den Lagen des Endes des Fortsatzes Gesagte entsprechend. Dargestellt ist der Kopf (10) so, daß seine Stirnfläche (14) bei unverschraubt auf das Schraubenende aufgesetzter Mutter mit der Stirnfläche (1) des hier mit (13) bezeichneten Schraubenkopfes genau oder näherungsweise abschließt.

Zur weiteren Verbesserung der Erkennbarkeit kann auch der Kopf in allen möglichen Lagen farblich markiert sein.

Die Fortbildung nach Fig. 2 kann durch eine Vorspannfeder (11) weiter fortgebildet werden, die sich einerseits an dem Kopf (10) des Fortsatzes (12) und andererseits an der Schraube (4) abstützt, also zwischen dem Kopf (10) und der Schraube (4) gefangen ist.

Die Vorspannfeder (11) muß so ausgebildet sein, daß die von ihr entfaltete Kraft die Schraube (4) und die Mutter gegeneinander vorspannt. Die von der Schraube (4) und der Mutter gebildete Baugruppe ist dadurch nicht ohne weiteres auflösbar. Dies vereinfacht unter bestimmten Bedingungen den Ansatz der Baugruppe an den zu verbindenden Bauteilen, beispielsweise wenn die Zuführung der Schraube über einen Schlitz oder ein sich verengendes Langloch erfolgen muß. Ein weiterer Vorteil dieser Fortbildung ist die vereinfachte Lagerhaltung.

Zwecks Aufnahme des Kopfes (10) ist im Ausführungsbeispiel der Hohlraum (8) im Bereich des Schraubenkopfes (13) erweitert. Die dadurch entstehende Stufenfläche quer zur Längserstreckung der Schraube (4) bietet der Vorspannfeder (11) eine Abstützfläche. Auch andere geeignete Lösungen sind insoweit möglich.

Der Kopf (10) kann auf jede geeignete Art mit dem Fortsatz (12) verbunden sein. Auch eine einteilige Ausgestaltung von Fortsatz (12) und Kopf (10) sind möglich. Im Ausführungsbeispiel erfolgt die Verbindung zwischen dem Kopf (10) und dem Fortsatz (12) im Hinblick auf eine etwa erforderlich werdende Demontage der Vorspannfeder (11) lösbar mittels einer Schraubverbindung am Ende des Fortsatzes (12).

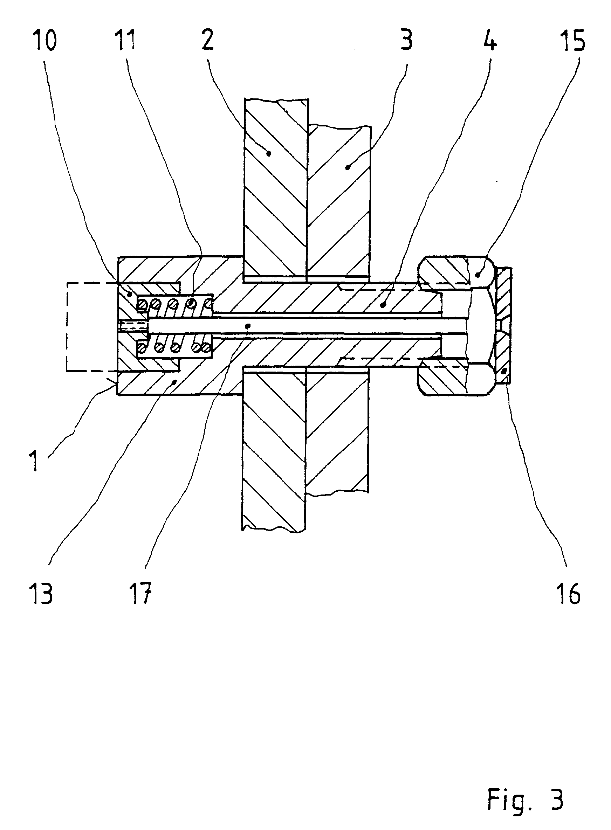

In Fig. 3 ist die Fortbildung nach Fig. 2 mit Vorspannfeder (11) dadurch fortgebildet, daß der mit (17) bezeichnete Fortsaztz auch an seinem im Bereich der hier mit (15) bezeichneten Mutter befindlichen Ende einen Kopf (16) aufweist. Dieser Kopf (16) überträgt die Kraft der Vorspannfeder (11) auf die Mutter (15), so daß diese im unverschraubten Zustand zwischen dem Kopf (16) und dem Schraubenende elastisch eingespannt und gehalten ist.

Wird in dieser Fortbildung die Mutter (15) auf die Schraube (4) aufgeschraubt, so bewirkt die Vorspannfeder (11), daß der Kopf (16), der Fortsatz (17) und der Kopf (10) der durch das Aufschrauben bedingten Längsverschiebung der Mutter (15) zunächst folgen. Dabei verändert der im Bereich des Schraubenkopfes (13) befindliche Kopf (10) des Fortsatzes (17), wie schon beschrieben, seine Lage und macht den Verschraubungszustand erkennbar. Die Folgebewegung von Kopf (16), Fortsatz (17) und Kopf (10) endet jedoch, wenn die Mutter (15) voll, d. h. in ihrer ganzen Länge auf die Schraube (4) aufgeschraubt ist. Dann schlägt der Kopf (16) an das Schraubenende an mit der Folge, daß seine Längsbewegung sowie die Längsbewegungen des Fortsatzes (17) und des Kopfes (10) zum Abschluß kommen. Die entsprechende Endlage des Kopfes (10) ist gestrichelt eingetragen.

Diese Fortbildung hat also den Vorteil, daß sie im Vergleich zu den Ausgestaltungen nach den Fig. 1 und 2 bei gleicher Einschraubtiefe der Mutter auf der Seite des Schraubenkopfes (13) weniger Einbauraum beansprucht. Ein weiterer Vorteil dieser Fortbildung ist, daß sie die Verwendung einer Standardmutter, beispielsweise einer Sechskantmutter, ermöglicht.

Da bei dieser Fortbildung der im Bereich der Mutter (15) befindliche Kopf (16) des Fortsatzes (17) immer unter der Kraft der Vorspannfeder (11) steht, braucht die Verbindung zwischen Fortsatz (17) und Kopf (16) nur in einer einfachen Axialsicherung zu bestehen, die die Kraft der Vorspannfeder (11) auf den Kopf (16) überträgt. Davon abgesehen, kann der Kopf (16) lose auf den Fortsatz (17) aufgeschoben sein. Er kann, wie dargestellt, beispielsweise die Form einer einfachen Scheibe, etwa einer Unterlegscheibe, haben. Selbstverständlich kann der Kopf (16) aber auch auf jede bekannte und zweckmäßige Art fest mit dem Fortsatz (17) verbunden sein.

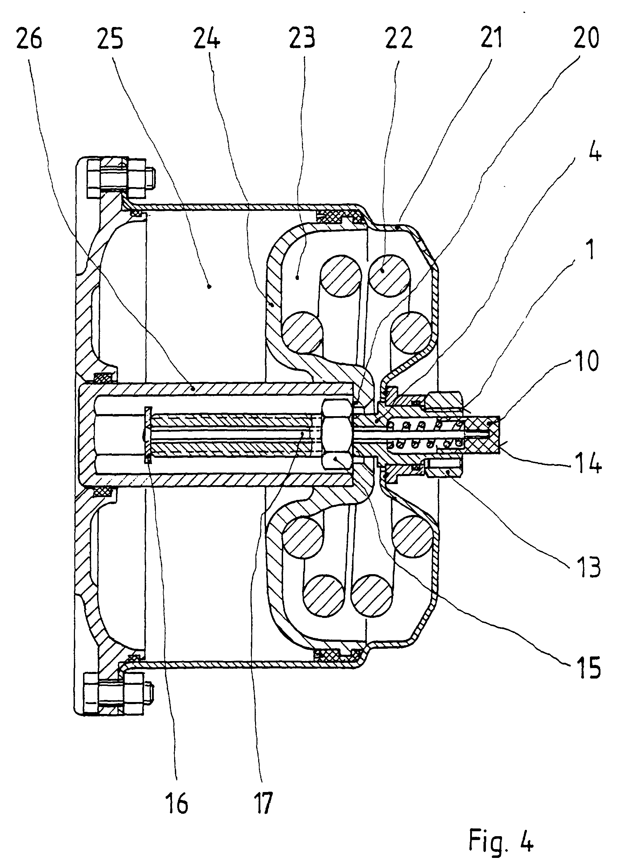

In dem in Fig. 4 dargestellten Anwendungsfall der Fortbildung nach Fig. 3 dient diese als mechanische Löseeinrichtung eines Federspeicherzylinders. Solche Federspeicherzylinder sind bekannt, z. B. aus der EP 0 279 930 B1. Sie sind auf vielen technischen Gebieten gebräuchlich, beispielsweise auf dem Gebiet der Bremstechnik für Fahrzeuge, wo sie häufig mit einem Betriebsbremszylinder kombiniert werden. Die vorliegende Beschreibung kann sich deshalb darauf beschränken, auf Einzelheiten des Federspeicherzylinders nur soweit einzugehen, wie dies zur Verständnis dieses Anwendungsfalls erforderlich ist.

Die Schraube (4) ist in diesem Fall auf eine geeignete Weise in dem Zylindergehäuse (21) axial fest, aber von außerhalb des Zylindergehäuses (21) drehbar, gelagert. Der Schraubenkopf (13) ist zu diesem Zweck außerhalb des Zylindergehäuses (21) angeordnet. Die dargestellte art der axialen Festlegung mittels eines nicht näher bezeichneten Anschweißstutzens des Zylindergehäuses (21) bedingt zur Ermöglichung der Montage und Demontage eine lösbare Verbindung zwischen dem Schaft der Schraube (4) und dem Schraubenkopf (13).

Die Mutter (15) ist innerhalb des Zylindergehäuses (21) drehfest oder angenähert drehfest, aber längsverschieblich, gelagert. Diese Lagerung der Mutter (15) geschieht dadurch, daß letztere in einem innerhalb des Zylindergehäuses (21) längsverschiebbaren Kraftübertrager (24) drehfest, aber längsverschieblich, geführt ist. Der Kraftübertrager (24) weist zu diesem Zweck ein zu der Außenkontur der Mutter (15) komplementäres Innenprofil auf. Ist also die Mutter (15) eine Sechskantmutter, so ist das Innenprofil des Kraftübertragers (24) ein zu dem Sechskant der Mutter (15) passender Innensechskant.

Der Kraftübertrager (24) ist der Kraft einer Speicherfeder (22) unterworfen und überträgt diese Kraft in betätigtem Zustand auf Bauteile, die diese Kraft nutzen, z. B. auf eine Radbremse in einem Fahrzeug. Zu diesem Zweck weist der Kraftübertrager (24) einen hohlen Fortsatz (26) auf, in dessen Inneren das erwähnte Führungsprofil für die Mutter (15) ausgebildet ist. Je nach Ausbildung des Druckübertragers (24) im Einzelfall erlauben der durch die Kraft der Speicherfeder (22) hervorgerufene Reibschluß und/oder ein Formschluß zwischen dem Ende der Speicherfeder (22) und dem Kraftübertrager (24) eine Drehung des Kraftübertragers (24) und damit eine Drehung der Mutter (15) innerhalb des Zylindergehäuses (21) nur in dem beschränkten Maße, wie das zugeordnete Ende der Speicherfeder (22) bei der Betätigung und beim Lösen des Federspeicherzylinders eine Drehung macht. Da sich auch die Mutter (15) nur in diesem Maße drehen kann, gilt sie als drehfest oder angenähert drehfest gelagert.

Der Kraftübertrager (24) ist in seinem der Speicherfeder (22) zugewandten Bereich in dem Zylindergehäuse (21) abgedichtet längsverschiebbar ausgebildet. Der Kraftübertrager (24) ist deshalb als Kolben einsetzbar, wobei der Fortsatz (26) eine Kolbenstange bildet. Durch die Abdichtung trennt der Kraftübertrager (24) in dem Zylindergehäuse (21) eine die Speicherfeder (22) aufnehmende Federkammer (23) von einer mit einem Druck beaufschlagbaren Lösekammer (25). Dieser Druck wirkt der Kraft der Speicherfeder (22) entgegen und bietet bei ausreichender Höhe eine Möglichkeit, eine Kraftabgabe über den Kraftübertrager (24) abzubrechen bzw. zu verhindern und dadurch den Federspeicherzylinder zu lösen bzw. gelöst zu halten.

Im Betriebszustand des Federspeicherzylinders befindet sich die die mechanische Löseeinrichtung bildende Baugruppe in der in Fig. 3 gezeichneten Stellung, in der die Mutter (15) unverschraubt auf das Schraubenende aufgesetzt ist. Die Länge des Schraubenschaftes ist so bemessen, daß in dieser Betriebsstellung der Baugruppe die Mutter (15) die Längsverschiebbarkeit des Kraftübertragers (24) zwischen einer Löse-Endstellung und einer Betätigungs-Endstellung nicht behindert. Beide Endstellungen sind durch nicht näher bezeichnete Gehäuseanschläge des Zylindergehäuses (21) bestimmt. Zwischen diesen Endstellungen kann der Kraftübertrager (24) beliebige Betätigungsstellungen einnehmen, die jeweils durch die die Kraft der Speicherfeder (22) nutzenden Bauteile bestimmt werden.

In Fig. 4 sind der Federspeicherzylinder und die die mechanische Löseeinrichtung bildende Baugruppe gemäß Fig. 3 in der Löse-Endstellung gezeichnet.

Zum Verstellen des Federspeicherzylinders aus der jeweiligen Betätigungsstellung in Richtung der Löse-Endstellung werden der Schraubenkopf (13) und damit die Schraube (4) gedreht. Dadurch wird die sich nicht mitdrehende Mutter (15) auf das Gewinde der Schraube (4) aufgeschraubt, wobei sie auf den Schraubenkopf (13) zu längs verschoben wird. Bei ihrer Längsverschiebung gelangt die Mutter (15) nach Zurücklegen eines Leerwegs in Eingriff mit einem an dem Kraftübertrager (24) angeordneten Mitnehmer (20). Über diesen Mitnehmer (20) nimmt die Mutter (15) dann bei ihrer weiteren Längsverschiebung den Kraftübertrager (24) gegen die Kraft der Speicherfeder (22) auf den Schraubenkopf (13) zu und damit in Richtung der Löse-Endstellung bis zum Anschlag des Kraftübertragers (24) an dem zugeordneten Gehäuseanschlag mit. Die Größe des erwähnten Leerwegs hängt von der jeweiligen Betätigungsstellung des Kraftübertragers (24) ab.

Der an dem der Mutter (15) abgewandten Ende des Fortsatzes (17) befindliche Kopf (10) ist so angeordnet, daß seine Stirnfläche (14) in der Betriebsstellung der Baugruppe mit der Stirnfläche (1) des Schraubenkopfes (13) genau oder näherungsweise abschließt. Deshalb tritt schon nach einem geringfügigen Drehen der Schraube (4) und der dadurch bewirkten Längsverschiebung der Mutter (15) der Kopf (10) aus der Stirnfläche (1) des Schraubenkopfes (13) hervor. Dadurch wird auf den ersten Blick von außen erkennbar, ob der Kraftübertrager (24) zwischen seinen Endstellungen frei verschiebbar oder ob diese Verschiebbarkeit eingeschränkt ist, mit anderen Worten, ob der Federspeicherzylinder voll oder nur beschränkt einsatzfähig ist.

Angesichts der oben beschriebenen Lage des Kopfes (10) des Fortsatzes (17) zum Schraubenkopf (13) in der Betriebsstellung der Baugruppe ist das Maß, um welches der Kopf (10) höchstens aus dem Schraubenkopf (13) hervortreten kann, auf den Wert der Mutterhöhe bzw. der Mutterlänge, in Längsrichtung des Federspeicherzylinders gemessen, beschränkt.

Durch entgegengesetztes Drehen der Schraube (13) werden der Federspeicherzylinder und die mechanische Löseeinrichtung in die Löse-Endstellung zurückgestellt, wobei der Kopf (10) in seine entsprechende Ausgangslage im Schraubenkopf (13) zurückgeht.

Es sei noch darauf hingewiesen, daß der Kopf (10) des Fortsatzes (17) in den Fortbildungen gemäß den Figuren 3 und 4 zum Schutze des Schraubeninneren und damit des Inneren des Anwendungsfalls vor Umwelteinflüssen zylinderförmig ausgebildet ist und auch in der ganz aus dem Schraubenkopf (13) herausgetretenen Stellung in letzteren eingetaucht bleibt.

In allen Fortbildungen mit der Vorspannfeder (11) hält diese den Fortsatz (12 bzw. 17) stets unter Zugspannung. Deshalb kann in diesen Fortbildungen der Fortsatz (12; 17) als nicht biegesteifes Bauteil, beispielsweise als Kette oder Seil, ausgebildet sein.

Im übrigen gelten die zu einer Ausgestaltung gegebenen Erläuterungen für die anderen Ausgestaltungen direkt oder entsprechend mit, sofern sich aus den Erläuterungen nichts Widersprechendes ergibt.

Der Fachmann erkennt,daß das Ausführungsbeispiel, die Fortbildungen und der Anwendungsfall den Schutzbereich der Erfindung nicht erschöpfend beschreiben, sondern daß sich dieser Schutzbereich auf alle Ausführungen und Anwendungen erstreckt, deren Merkmale sich den Patentansprüchen unterordnen.

## Patentansprüche

1. Baugruppe mit einer Schraube und einer Mutter, wobei
die Schraube (4) in ihrer Längsrichtung hohl ist und ein Fortsatz (7; 12; 17) im Hohlraum (8) der Schraube (4) angeordnet ist, wobei bein Verschrauber der Baugruppe sich der Fortsatz gegenüber dem Hohlraum bewegt,
**dadurch gekennzeichnet, daß** der Fortsatz (7; 12; 17) von der Mutter (5; 15) ausgeht und bei unverschraubt auf das Schraubenende aufgesetzter Mutter (5; 15) in den Hohlraum eindringt oder ihn durchdringt.

2. Baugruppe nach Anspruch 1,
**dadurch gekennzeichnet,**
**daß** der Fortsatz (7; 12; 17) im Bereich des Schraubenkopfes (9; 13) endet.

3. Baugruppe nach einem der vorhergehenden Ansprüche,
**dadurch gekennzeichnet,**
**daß** der Fortsatz (12; 17) an seinem der Mutter (15) abgewandten Ende einen Kopf (10) aufweist.

4. Baugruppe nach Anspruch 3,
**dadurch gekennzeichnet,**
**daß** zwischen dem an dem der Mutter (15) abgewandten Ende des Fortsatzes (12; 17) befindlichen Kopf (10) des Fortsatzes (12; 17) und der Schraube (4) eine die Schraube (4) und die Mutter (15) gegeneinander vorspannende Vorspannfeder (11) gefangen ist.

5. Baugruppe nach Anspruch 4,
**dadurch gekennzeichnet,**
**daß** der Fortsatz (17) auch an seinem im Bereich der Mutter (15) befindlichen Ende einen Kopf (16) aufweist, der wenigstens vor dem Verschrauben von Mutter (15) und Schraube (4) die Kraft der Vorspannfeder (11) auf die Mutter (15) überträgt.

6. Baugruppe nach Anspruch 5,
**dadurch gekennzeichnet,**
**daß** diese Baugruppe als mechanische Löseeinrichtung in einen Federspeicherzylinder mit einer Speicherfeder (22) eingebaut ist,
wobei
die Schraube (4) in dem Zylindergehäuse (21) axial fest, aber von außerhalb des Zylindergehäuses (21) drehbar, gelagert ist,
die Mutter (15) innerhalb des Zylindergehäuses (21) wenigstens im wesentlichen drehfest, aber längsverschieblich, gelagert ist und
die Mutter (15) wenigstens auf einem Teil ihrer durch das Drehen der Schraube (4) bewirkten Längsverschiebung einen der Kraft der Speicherfeder (22) unterworfenen Kraftübertrager (24) entgegen der Kraft der Speicherfeder (22) mitnimmt.

7. Baugruppe nach Anspruch 1,
**dadurch gekennzeichnet,**
**daß** das Ende des Fortsatzes (7) wenigstens im wesentlichen mit der Stirnfläche (1) des Schraubenkopfes (9) abschließt.

8. Baugruppe nach einem der Ansprüche 3 bis 6,
**dadurch gekennzeichnet,**
**daß** die Stirnfläche (14) des an dem der Mutter (15) abgewandten Ende des Fortsatzes (12; 17) befindlichen Kopfes (10) wenigstens im wesentlichen mit der Stirnfläche (1) des Schraubenkopfes (13) abschließt.

9. Baugruppe nach einem der vorliegenden Ansprüche,
**dadurch gekennzeichnet, daß** der Fortsatz (7; 12; 17) als Stift ausgebildet ist.

10. Baugruppe nach einem der Ansprüche 4 bis 6 oder 8,
**dadurch gekennzeichnet, daß** der Fortsatz (12; 17) als nicht biegesteifes Bauteil, beispielsweise als Kette oder Seil, ausgebildet ist.

## Claims

1. Assembly having a bolt and a nut, the bolt (4) being hollow in its longitudinal direction and an extension (7; 12; 17) being arranged in the hollow space (8) in the bolt (4), wherein the extension moves relative to the hollow space when the assembly is being screwed up,
**characterised in that**
the extension (7; 12; 17) starts at the nut (5; 15) and, when the nut (5; 15) is placed on the end of the bolt without being screwed up, passes into or through the hollow space.

2. Assembly according to claim 1,
**characterised in that**
the extension (7; 12; 17) terminates in the region of the bolt head (9; 13).

3. Assembly according to one of the preceding claims,
**characterised in that**
the extension (12; 17) has a head (10) at its end remote from the nut (15).

4. Assembly according to claim 3,
**characterised in that**,
between the head (10) on the extension (12, 17), which head (10) is located at the end of the extension (12; 17) remote from the nut (15), and the bolt (4), there is held captive a biasing spring (11) which biases the bolt (4) and the nut (15) against one another.

5. Assembly according to claim 4,
**characterised in that**
the extension (17) also has a head (16) at its end located in the region of the nut (15), which head (16), at least before the nut (15) and bolt (4) are screwed up, transmits the force of the biasing spring (11) to the nut (15).

6. Assembly according to claim 5,
**characterised in that**
the assembly is incorporated as a mechanical releasing device into a springloaded cylinder having a pre-loaded spring (22),
wherein
the bolt (4) is so mounted in the cylinder housing (21) that it is axially fixed but is rotatable from outside the cylinder housing (21),
the nut (15) is so mounted inside the cylinder housing (21) that it is at least substantially non-rotatable but is longitudinally displaceable, and
over at least part of its longitudinal displacement caused by rotation of the bolt (4), the nut (15) drives, against the force of the pre-loaded spring (22), a force transmitter (24) subjected to the force of the pre-loaded spring (22).

7. Assembly according to claim 1,
**characterised in that**
the end of the extension (7) finishes at least substantially flush with the end face (1) of the bolt head (9).

8. Assembly according to one of claims 3 to 6,
**characterised in that**
the end face (14) of the head (10) located at the end of the extension (12; 17) remote from the nut (15) finishes at least substantially flush with the end face (1) of the bolt head (13).

9. Assembly according to one of the preceding claims, **characterised in that** the extension (7; 12; 17) is in the form of a rod.

10. Assembly according to one of claims 4 to 6 or 8, **characterised in that** the extension (12; 17) is in the form of a component that is not inflexible, for example a chain or rope.

## Revendications

1. Ensemble comportant une vis et un écrou,
la vis (4) étant creuse en direction longitudinale et un prolongement (7 ; 12 ; 17) étant agencé dans la cavité (8) de la vis (4), le prolongement se déplaçant par rapport à la cavité lors du vissage de l'ensemble, **caractérisé en ce que** le prolongement (7 ; 12 ; 17) part de l'écrou (5 ; 15) et pénètre dans la cavité ou traverse celle-ci lorsque l'écrou (5 ; 15) est placé sans être vissé sur l'extrémité de la vis.

2. Ensemble selon la revendication 1, **caractérisé en ce que** le prolongement (7 ; 12, 17) se termine dans la région de la tête de vis (9 ; 13).

3. Ensemble selon l'une quelconque des revendications précédentes, **caractérisé en ce que** le prolongement (12 ; 17) présente une tête à son extrémité détournée de l'écrou (15).

4. Ensemble selon la revendication 3, **caractérisé en ce qu'**entre la tête (10) du prolongement (12 ; 17), se trouvant à l'extrémité du prolongement (12 ; 17) qui est détournée de l'écrou (15), et la vis (4) est retenu un ressort de précontrainte (11) qui précontraint la vis (4) et l'écrou (15) l'une contre l'autre.

5. Ensemble selon la revendication 4, **caractérisé en ce que** le prolongement (17) présente aussi à son extrémité se trouvant dans la région de l'écrou (15) une tête (16) qui transmet sur l'écrou (15) au moins avant le vissage de l'écrou (15) et de la vis (4), la force du ressort de précontrainte (11).

6. Ensemble selon la revendication 5, **caractérisé en ce que** cet ensemble est monté sous forme d'un dispositif de relâchement mécanique dans un cylindre à accumulateur à ressort avec ressort accumulateur (22),
la vis (4) étant montée dans le boîtier de cylindre (21) de manière fixe axialement, mais rotative depuis l'extérieur du boîtier de cylindre (21),
l'écrou (15) étant monté à l'intérieur du boîtier de cylindre (21) au moins sensiblement solidaire en rotation, mais déplaçable en sens longitudinal, et
l'écrou (15) entraîne, au moins sur une partie de son déplacement longitudinal suscité par la rotation de la vis (4), un transmetteur de force (24) soumis à la force du ressort accumulateur (22), à l'encontre de la force du ressort accumulateur (22).

7. Ensemble selon la revendication 1, **caractérisé en ce que** l'extrémité du prolongement (7) se termine au moins sensiblement avec la face frontale (1) de la tête de vis (9).

8. Ensemble selon l'une quelconque des revendications 3 à 6, **caractérisé en ce que** la face frontale (14) de la tête (10) se trouvant à l'extrémité du prolongement (12 ; 17), qui est détournée de l'écrou (15), se termine au moins sensiblement avec la face frontale (1) de la tête de vis (13).

9. Ensemble selon l'une quelconque des revendications précédentes, **caractérisé en ce que** le prolongement (7 ; 12 ; 17) est réalisé sous forme de goupille.

10. Ensemble selon l'une quelconque des revendications 4 à 6 ou 8, **caractérisé en ce que** le prolongement (12 ; 17) est réalisé sous forme de composant non rigide à la flexion, c'est-à-dire sous forme de chaîne ou de câble.
